# FASCICULE DE BREVET EUROPEEN

(11) **EP 2 088 060 B1**
(45) Date de publication et mention de la délivrance du brevet: **22.06.2011**
(21) Numéro de dépôt: 09151282.2
(22) Date de dépôt: 23.01.2009
(51) Int. Cl.: B62D 25/16, B60R 13/08

(54) **Pare-boue de véhicule automobile muni d'un écran acoustique**
Schmutzfänger eines Kraftfahrzeugs mit einer Akustikblende
Automobile mudguard equipped with an accoustic screen

(30) Priorité: 08.02.2008 FR 0850808
(43) Date de publication de la demande: 12.08.2009
(73) Titulaire: PEUGEOT CITROËN AUTOMOBILES SA, 78140 Vélizy Villacoublay (FR)
(72) Inventeur: Malaubier, Philippe, 78550, RICHEBOURD (FR)

(56) Documents cités:
- FR-A- 2 835 494
- FR-A- 2 896 224
- JP-A- 2003 063 453
- US-A1- 2006 214 474

## Description

La présente invention concerne un pare-boue de véhicule automobile, du type destiné à être positionné entre un passage de roue de carrosserie et une roue de véhicule automobile, le pare-boue comportant :
- un corps comprenant une enveloppe qui délimite un volume de passage de roue, l'enveloppe comprenant une paroi incurvée destinée à être en regard de la surface de roulement de la roue et une paroi verticale destinée à être en regard de la jante de la roue ; et
- un écran acoustique lié au corps.

Le document FR-A-2 835 494 décrit un pare-boue de véhicule automobile comportant une enveloppe de pare-boue délimitant un volume de passage de roue. L'enveloppe comprend une paroi semi-cylindrique destinée à être en regard de la surface de roulement de la roue et une paroi sensiblement verticale destinée à être en regard de la jante de la roue. En outre, le pare-boue est muni d'une pluralité d'écrans acoustiques visant à empêcher la diffusion du bruit du moteur vers l'extérieur du véhicule en étanchéifiant l'ensemble du compartiment moteur d'un point de vue acoustique.

Néanmoins, le niveau de bruit à l'intérieur de l'habitacle n'est pas totalement satisfaisant. En outre, le coût de fabrication est important.

Un but de l'invention est de réduire le bruit produit par le moteur dans l'habitacle tout en limitant le coût de fabrication du véhicule.

A cet effet, l'invention a pour objet un pare-boue du type précité, caractérisé en ce que l'écran acoustique comprend une partie accolée à la paroi verticale et couvrant la paroi verticale, et une partie en saillie prolongeant la partie accolée et faisant saillie généralement radialement par rapport à la paroi incurvée de l'enveloppe.

Suivant des modes particuliers de réalisation, le pare-boue comporte une ou plusieurs des caractéristiques suivantes, prise(s) isolément ou suivant toutes les combinaisons techniquement possibles :
- l'écran s'étend vers le haut à partir d'une extrémité inférieure du corps du pare-boue ;
- l'écran forme essentiellement une surface d'écran vertical ;
- l'écran comprend une languette de guidage destinée à coopérer avec des éléments du véhicule pour l'insertion du pare-boue sur le véhicule par translation vers le haut ;
- la languette de guidage forme un relief de coincement entre deux éléments du véhicule ;
- l'un de l'écran et de la paroi verticale forme une nervure verticale destinée à coopérer avec une rainure verticale de l'autre et de l'écran et de la paroi verticale ;
- l'un de l'écran et de la paroi verticale comprend un organe d'accrochage vertical dans un trou correspondant de l'autre de l'écran et de la paroi verticale ;
- le corps du pare-boue comprend une paroi horizontale prolongeant l'enveloppe, l'écran comprenant au moins une patte de fixation sur la paroi horizontale ;
- la partie en saillie de l'écran comprend une nervure verticale de rigidification, la nervure de rigidification s'étendant de préférence vers le haut à partir d'une extrémité inférieure de l'écran ;
- l'écran comprend un support de fixation et un matériau isolant composé de préférence de laine de verre et de résine phénolique et recouvert d'une couche de protection oléophobe, le matériau isolant ayant de préférence une épaisseur comprise entre 13 et 17 mm et ayant de préférence une masse surfacique comprise entre 400 et 600 g/m2 ; et
- l'écran est une pièce rapportée sur le corps du pare-boue.

L'invention a également pour objet un véhicule automobile comportant au moins une roue et un pare-boue enveloppant la roue, caractérisé en ce que le pare-boue est tel que décrit ci-dessus.

Suivant des modes particuliers de réalisation, le véhicule automobile comporte une ou plusieurs des caractéristiques suivantes, prise(s) isolément ou suivant toutes les combinaisons techniquement possibles :
- le véhicule comporte un moteur équipé d'un groupe de distribution, l'écran acoustique étant disposé en regard du groupe de distribution du moteur ; et
- le véhicule comprend un bocal lave-vitres et un brancard, le pare-boue comprenant une languette de guidage destinée à être coincée entre le bocal lave-vitres et le brancard.

L'invention sera mieux comprise à la lecture de la description qui va suivre, donnée uniquement à titre d'exemple, et faite en se référant aux dessins annexés, sur lesquels :
- la figure 1 est une vue schématique de dessus illustrant un compartiment moteur avant d'un véhicule automobile selon l'invention ;
- la figure 2 est une vue latérale interne en perspective d'un pare-boue de la figure 1 comprenant un écran acoustique selon l'invention ;
- la figure 3 est une vue agrandie d'un détail III de la figure 2 ;
- la figure 4 est une vue latérale en perspective d'une plaque structurelle de l'écran acoustique des figures 2 et 3 ; et
- la figure 5 est une vue schématique illustrant l'insertion d'une extrémité supérieure de l'écran acoustique des figures 2 et 3 dans le compartiment moteur de la figure 1.

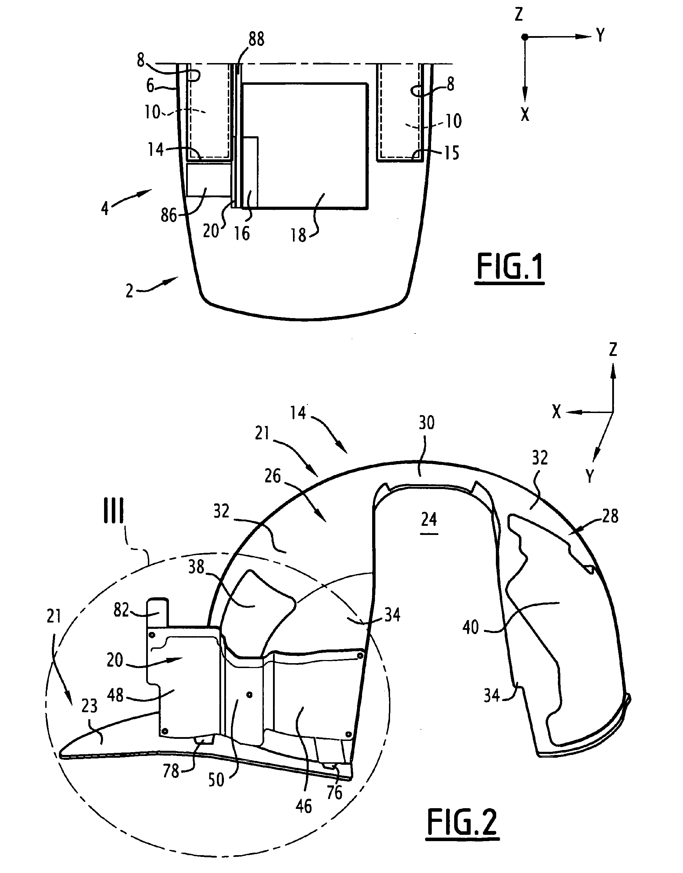

La figure 1 illustre un compartiment moteur 2 situé à l'avant d'un véhicule automobile 4.

Dans tout ce qui suit, les termes "avant", "arrière", "longitudinal", "transversal", "horizontal", "vertical", "haut", "bas", "supérieur", "inférieur", s'entendent par rapport au repère orthogonal usuel d'un véhicule automobile comprenant :
- un axe longitudinal X, horizontal et orienté de l'arrière vers l'avant ;
- un axe transversal Y, horizontal et orienté de la droite vers la gauche ; et
- un axe Z vertical et orienté du bas vers le haut.

Les termes "interne" et "externe" s'entendent par rapport au compartiment moteur 2.

La carrosserie 6 du véhicule délimite des passages de roue 8 pour chacune des roues avant 10.

Le véhicule 4 comprend, au niveau de chacune des roues avant 10, un pare-boue 14, 15 s'étendant entre la roue 10 et le passage de roue 8 correspondant de la carrosserie 6.

L'invention concerne plus particulièrement le pare-boue avant droit 14, c'est-à-dire le pare-boue 14 situé en regard du groupe de distribution moteur 16 du moteur 18. Le pare-boue gauche 15 est par exemple de type connu, et dans toute la suite de la description il sera fait référence au pare-boue droit 14.

En effet, le pare-boue droit 14 comprend un écran acoustique 20 rapporté s'étendant en regard du groupe de distribution 16.

La géométrie du pare-boue 14 et le positionnement de l'écran acoustique 20 seront maintenant décrits plus en détail.

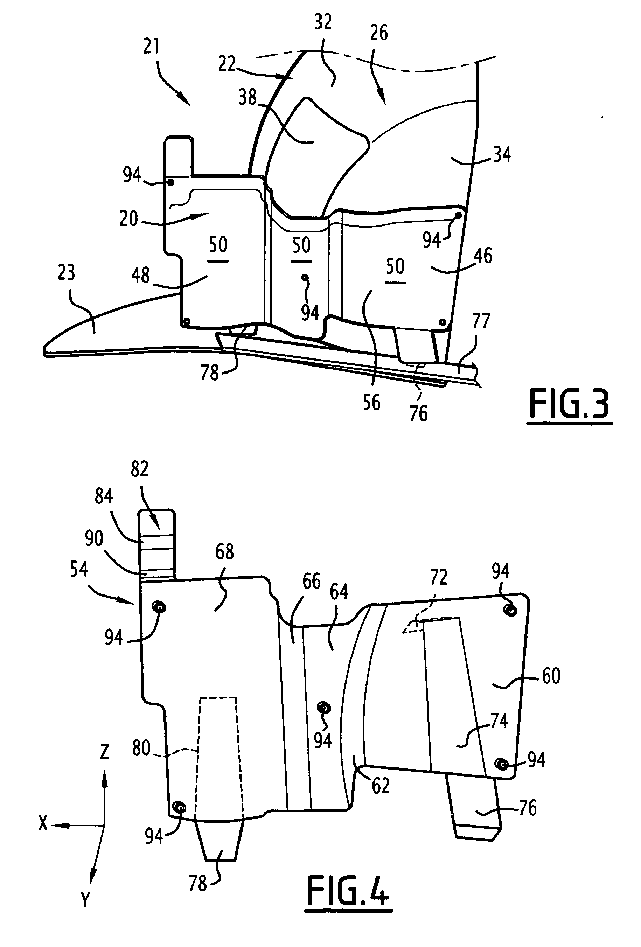

Comme illustré sur les figures 2 et 3, le pare-boue 14 comprend un corps 21 comprenant une enveloppe 22 de pare-boue délimitant un volume de passage de roue et entourant la roue 10. Le corps 21 comprend également une paroi horizontale 23 de pare-boue prolongeant l'extrémité inférieure de l'enveloppe 22 vers l'avant.

L'enveloppe 22 délimite une ouverture latérale 24 de passage de l'amortisseur et de l'essieu de roue. L'ouverture 24 divise sensiblement l'enveloppe 22 en son milieu de telle sorte que l'enveloppe 22 comprend une partie avant 26, une partie arrière 28 et un pont de matière 30 joignant les parties avant et arrière 26, 28.

Chacune des parties avant et arrière 26, 28 comprend une paroi incurvée 32, en forme générale de portion de cylindre, s'étendant en regard de la surface de roulement de la roue 10 et une paroi verticale 34 prolongeant la paroi incurvée 32 sensiblement à angle droit et s'étendant en regard de la jante de la roue 10.

La paroi horizontale 23 prolonge vers l'avant l'extrémité inférieure de la paroi incurvée avant 32 et de la paroi verticale avant 34, sur l'ensemble de leur largeur. La paroi horizontale 23 a un contour en forme d'aileron de requin, dont le bord externe épouse la forme de la carrosserie.

Le pare-boue 14 comprend également un isolant acoustique avant 38 accolé à la paroi incurvée 32 de la partie avant 26 de l'enveloppe 22, et un isolant acoustique arrière 40 accolé à la paroi incurvée 32 de la partie arrière 28 de l'enveloppe 22. Les isolants 38 et 40 épousent la forme de la paroi incurvée 32.

L'écran acoustique 20 comprend une partie arrière d'attache 46 accolée à la paroi verticale 34 de la partie avant 26 de l'enveloppe 22, et une partie radiale avant en saillie 48 prolongeant la partie accolée 46 vers l'avant et espacée de l'enveloppe 22. La partie en saillie 48 fait saillie vers l'avant par rapport à la paroi verticale 34 de l'enveloppe 22. La partie accolée 46 et la partie en saillie 48 forment une surface d'écran 50 de préférence verticale et continue, disposée en regard du groupe de distribution moteur 16, à une distance de préférence inférieure à 30 mm. La surface d'écran 50 a une aire de préférence supérieure ou égale à 6 dm². Compte tenu toutefois que l'effet d'insonorisation optimal est obtenu selon la nature du matériau et de son épaisseur, la surface de l'écran est augmentée lorsque l'épaisseur de matériau insonorisant est difficilement implantable. A titre d'exemple, une surface de 6dam² d'écran 50 nécessite une épaisseur de matériau insonorisant d'environ 15mm.

La surface d'écran 50 a de préférence une longueur suivant l'axe X de préférence supérieure à 300 mm et une hauteur suivant l'axe Z de préférence supérieure à 200 mm.

Comme illustré plus en détail sur la figure 2, l'écran 20 est composé d'une plaque structurelle de support 54 moulée par injection de matière plastique et d'un matériau isolant 56 rapporté et fixé sur la plaque 54. Néanmoins, en variante, l'écran 20 est formé dans un unique matériau.

Comme illustré sur la figure 4, la plaque de support 54 comprend successivement, de l'arrière vers l'avant, une partie arrière 60 longitudinale verticale et accolée à la paroi verticale 34, une partie formant coude 62 accolée à l'angle formé par la paroi incurvée 32 et la paroi verticale 34 de l'enveloppe 22, une partie en saillie 64 longitudinale verticale, espacée de l'enveloppe 22, une partie transversale 66 formant un décrochement latéral, et une partie avant 68 longitudinale verticale. Les parties 60 et 62 forment avec l'isolant 56 la partie accolée 46 de l'écran 20, tandis que les parties 64, 66 et 68 forment avec l'isolant 56 la partie en saillie 48 de l'écran 20.

La plaque de support 54 délimite une paroi d'une épaisseur sensiblement constante.

La plaque de support 54 comprend, au niveau de sa partie arrière 60, un gonc 72 d'accrochage vertical dans un trou correspondant de l'enveloppe 22, ainsi qu'une nervure verticale 74 adaptée pour coopérer avec une rainure verticale complémentaire de la paroi verticale 34 de l'enveloppe 22 pour un guidage en coulissement vertical de la plaque 54 et son blocage en translation suivant la direction longitudinale X.

La plaque de support 54 comporte, en outre, au niveau de l'extrémité inférieure de sa partie arrière 60, une patte 76 d'appui horizontal et de coincement entre la paroi horizontale 23 du pare-boue 14 et une prolonge de berceau 77.

La plaque de support 54 comporte également, au niveau de l'extrémité inférieure de sa partie avant 68, et à proximité de l'extrémité avant de l'écran 20, une patte 78 d'appui horizontal et de fixation sur la paroi horizontale 23, par exemple au moyen d'un rivet, ainsi qu'une nervure externe de rigidification 80 s'étendant vers le haut à partir de la patte 78, par exemple sur environ la moitié de la hauteur de la plaque 54.

La plaque de support 54 comporte, au niveau de l'extrémité supérieure de sa partie avant 68, une languette de guidage 82 faisant saillie vers le haut pour une insertion verticale par le bas du pare-boue 14 sur la carrosserie 6.

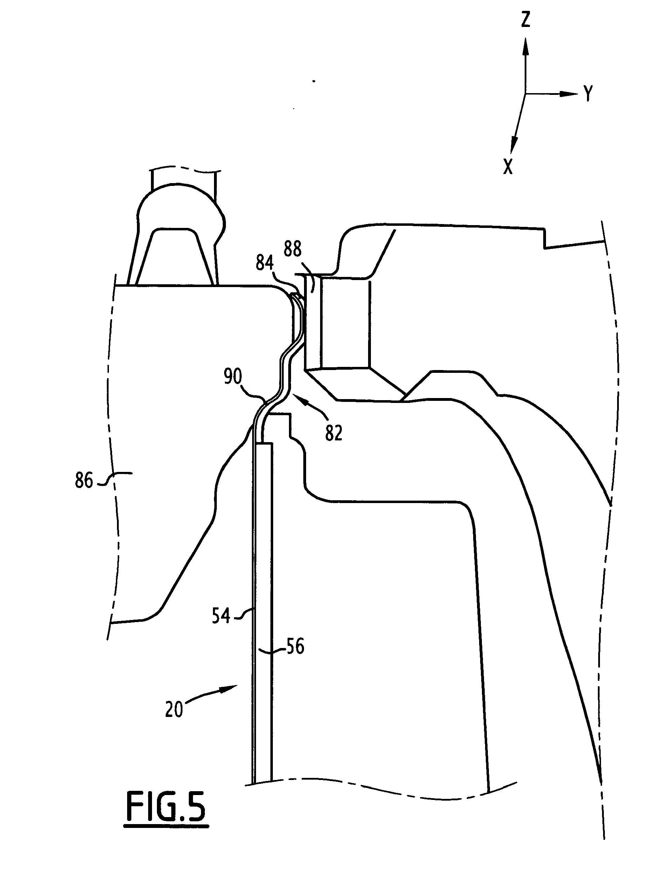

Comme illustré sur la figure 5, la languette 82 forme un relief de coincement 84 entre un bocal lave-vitres 86 et un brancard 88 du compartiment moteur 2.

En outre, la languette 82 forme un relief de butée 90 sur le bocal lave-vitres 86 limitant le déplacement vertical du pare-boue 14 vers le haut lors de son insertion par translation verticale.

Enfin, la plaque de support 54 comporte cinq points 94 de fixation du matériau isolant 56, quatre des points 94 étant disposés aux quatre coins de la plaque 54 et le cinquième étant disposé sensiblement au centre de la plaque 54. Chaque point de fixation 94 est réalisé par un rivet ou bien est obtenu par un procédé de fusion de matière.

Pour le montage du pare-boue 14, les isolants acoustiques 38 et 40 sont d'abord fixés sur l'enveloppe 22.

Le matériau isolant 56 est fixé sur la plaque de support 54.

L'enveloppe 22 est, avant montage sur le véhicule, dépourvue de l'écran 20 ce qui favorise un gain de place pour le stockage. Compte tenu que l'écran 20 est une pièce distincte du corps 21 du pare-boue 14, les corps 21 dépourvus de l'écran 20 permettent un empilage par superposition.

L'écran 20 est par la suite glissé sur l'enveloppe 22 du corps 21 par translation verticale vers le bas le long de la paroi verticale avant 34, jusqu'à sa position de fixation. Lors de cette translation, la nervure 74 coopère alors avec la rainure correspondante pour un guidage en translation. La patte 78 est ensuite fixée à la paroi horizontale 23. Il s'agit de la seule fixation requise.

La patte de fixation 78 est alors en appui sur la paroi horizontale 23 du corps 21, et la partie arrière 60 ainsi que la partie formant coude 62 sont, sur l'ensemble de leur surface, en appui sur l'enveloppe 22.

Le pare-boue 14 muni de l'écran 20 est inséré par translation verticale vers le haut dans le passage de roue 8 délimité par la carrosserie 6. Lors de cette translation, la languette de guidage 82 coopère avec le bocal 86 et le brancard 88 pour guider le pare-boue 14 et notamment l'écran 20.

Une fois le pare-boue 14 fixé, par exemple par rivetage sur la carrosserie 6, la languette de guidage 82 est coincée entre le bocal 86 et le brancard 88 tandis que la patte de coincement 76 est coincée entre la paroi horizontale 23 du pare-boue 14 et la prolonge de berceau 77.

L'invention fourni un écran acoustique 20, disposé en regard d'une source de bruit importante à savoir le groupe de distribution moteur 16 et ce, à une distance faible. L'écran 20 limite non seulement le bruit produit par absorption et réflexion des ondes sonores mais protège aussi les évacuations d'eau et le pied avant du bruit rayonné par le groupe de distribution moteur 16. En effet, ces éléments se sont avérés susceptibles de conduire le bruit jusqu'à l'habitacle. Il s'ensuit une réduction du niveau sonore perçu à l'intérieur de l'habitacle du véhicule.

L'invention ne nécessite pas de réaliser une isolation acoustique complète du compartiment moteur 2 et évite par exemple de prévoir un écran acoustique sur le moteur même 18, ce qui serait particulièrement contraignant notamment pour l'insertion du moteur 18.

En outre, le pare-boue 14 est facile d'installation et de coût faible.

L'écran acoustique 20 étant une pièce rapportée sur le corps 21 du pare-boue 14, il constitue ainsi une option de fabrication et permet de diminuer le coût de revient du corps 21 du pare-boue 14 qui est également utilisable pour un pare-boue 14 dépourvu d'écran acoustique 20.

La fixation de l'écran 20 est sûre, aisée, et de coût faible.

En outre, le pare-boue 14, avant montage de l'écran 20, peut être empilé facilement.

En variante néanmoins, l'écran 20 est venu de matière avec l'enveloppe 22 et plié au niveau d'un film charnière pour prendre sa position définitive lors du montage.

En variante également, l'écran acoustique 20 est disposé sur un autre pare-boue, comme le pare-boue gauche 15, en regard d'une source de bruit importante.

En variante enfin, l'écran acoustique 20 est disposé sur un pare-boue arrière, par exemple au droit d'un élément générateur de bruit d'une ligne d'échappement, tel qu'un silencieux.

L'invention s'applique ainsi également à d'autres sources de bruit que le groupe de distribution moteur 16.

## Revendications

1. Pare-boue (14) de véhicule automobile (2), du type destiné à être positionné entre un passage de roue (8) de carrosserie (6) et une roue (10) de véhicule automobile (2), le pare-boue (14) comportant :
- un corps (21) comprenant une enveloppe (22) qui délimite un volume de passage de roue, l'enveloppe (22) comprenant une paroi incurvée (32) destinée à être en regard de la surface de roulement de la roue (10) et une paroi verticale (34) destinée à être en regard de la jante de la roue (10) ; et
- un écran acoustique (20) lié au corps (21) ;
**caractérisé en ce que** l'écran acoustique (20) comprend une partie accolée (46) à la paroi verticale (34) et couvrant la paroi verticale (34), et une partie en saillie (48) prolongeant la partie accolée (46) et faisant saillie généralement radialement par rapport à la paroi incurvée (32) de l'enveloppe (22).

2. Pare-boue (14) selon la revendication 1, **caractérisé en ce que** l'écran (20) s'étend vers le haut à partir d'une extrémité inférieure du corps (21) du pare-boue (14).

3. Pare-boue (14) selon la revendication 1 ou 2, **caractérisé en ce que** l'écran (20) forme essentiellement une surface d'écran vertical (50).

4. Pare-boue (14) selon l'une quelconque des revendications précédentes, **caractérisé en ce que** l'écran (20) comprend une languette de guidage (82) destinée à coopérer avec des éléments (86, 88) du véhicule (4) pour l'insertion du pare-boue (14) sur le véhicule (2) par translation vers le haut.

5. Pare-boue (14) suivant la revendication 3 ou 4, **caractérisé en ce que** la languette de guidage (82) forme un relief de coincement (84) entre deux éléments (86, 88) du véhicule (4).

6. Pare-boue (14) suivant l'une quelconque des revendications précédentes, **caractérisé en ce que** l'un de l'écran (20) et de la paroi verticale (34) forme une nervure verticale (74) destinée à coopérer avec une rainure verticale de l'autre et de l'écran (20) et de la paroi verticale (34).

7. Pare-boue (14) suivant l'une quelconque des revendications précédentes, **caractérisé en ce que** l'un de l'écran (20) et de la paroi verticale (34) comprend un organe d'accrochage vertical (72) dans un trou correspondant de l'autre de l'écran (20) et de la paroi verticale (34).

8. Pare-boue (14) suivant l'une quelconque des revendications précédentes, **caractérisé en ce que** le corps (21) du pare-boue (14) comprend une paroi horizontale (23) prolongeant l'enveloppe (22), l'écran (20) comprenant au moins une patte de fixation (76) sur la paroi horizontale (23).

9. Pare-boue (14) suivant l'une quelconque des revendications précédentes, **caractérisé en ce que** la partie en saillie (48) de l'écran (20) comprend une nervure verticale de rigidification (80), la nervure de rigidification (80) s'étendant de préférence vers le haut à partir d'une extrémité inférieure de l'écran (20).

10. Pare-boue (14) suivant l'une quelconque des revendications précédentes, **caractérisé en ce que** l'écran (20) comprend un support de fixation (54) et un matériau isolant (56) composé de préférence de laine de verre et de résine phénolique et recouvert d'une couche de protection oléophobe, le matériau isolant (56) ayant de préférence une épaisseur comprise entre 13 et 17 mm et ayant de préférence une masse surfacique comprise entre 400 et 600 g/m2

11. Pare-boue (14) suivant l'une quelconque des revendications précédentes, **caractérisé en ce que** l'écran (20) est une pièce rapportée sur le corps (21) du pare-boue (14).

12. Véhicule automobile (4) comportant au moins une roue (10) et un pare-boue (14) enveloppant la roue (10), **caractérisé en ce que** le pare-boue (14) est selon l'une quelconque des revendications 1 à 11.

13. Véhicule automobile (4) selon la revendication 12, **caractérisé en ce qu'**il comporte un moteur (18) équipé d'un groupe de distribution (16), l'écran acoustique (20) étant disposé en regard du groupe de distribution (16) du moteur (18).

14. Véhicule automobile (4) selon la revendication 12 ou 13, **caractérisé en ce que** le véhicule comprend un bocal lave-vitres (86) et un brancard (88), le pare-boue (14) comprenant une languette de guidage (82) destinée à être coincée entre le bocal lave-vitres (86) et le brancard (88).

## Claims

1. Mudguard (14) for a motor vehicle (2), of the type for positioning between a wheel housing (8) of the vehicle body (6) and a wheel (10) of the motor vehicle (2), the mudguard (14) comprising:
- a body (21) comprising a casing (22) which defines a wheel housing volume, the casing (22) comprising an incurvate wall (32) to be located opposite the tread of the wheel (10) and a vertical wall (34) to be located opposite the rim of the wheel (10); and
- an acoustic baffle (20) connected to the body (21);
**characterised in that** the acoustic baffle (20) comprises a portion (46) which is attached to the vertical wall (34) and covers the vertical wall (34), and a projecting portion (48) which extends the attached portion (46) and projects generally radially relative to the incurvate wall (32) of the casing (22).

2. Mudguard (14) according to claim 1, **characterised in that** the baffle (20) extends upwards from a lower end of the body (21) of the mudguard (14).

3. Mudguard (14) according to either claim 1 or claim 2, **characterised in that** the baffle (20) basically forms a vertical baffle surface (50).

4. Mudguard (14) according to any one of the preceding claims, **characterised in that** the baffle (20) comprises a guide tongue (82) for cooperating with elements (86, 88) of the vehicle (4) so that the mudguard (14) can be inserted into the vehicle (2) by upward displacement.

5. Mudguard (14) according to either claim 3 or claim 4, **characterised in that** the guide tongue (82) forms a wedging recess (84) between two elements (86, 88) of the vehicle.

6. Mudguard (14) according to any one of the preceding claims, **characterised in that** either the baffle (20) or the vertical wall (34) forms a vertical rib (74) for cooperating with a vertical groove on the respective other one of the baffle (20) and the vertical wall (34).

7. Mudguard (14) according to any one of the preceding claims, **characterised in that** either the baffle (20) or the vertical wall (34) comprises a member (72) for vertical locking in a corresponding hole of the respective other one of the baffle (20) and the vertical wall (34).

8. Mudguard (14) according to any one of the preceding claims, **characterised in that** the body (21) of the mudguard (14) comprises a horizontal wall (23) which extends the casing (22), the baffle (20) comprising at least one foot (76) for securing to the horizontal wall (23).

9. Mudguard (14) according to any one of the preceding claims, **characterised in that** the projecting portion (48) of the baffle (20) comprises a vertical stiffening rib (80), the stiffening rib (80) preferably extending upwards from a lower end of the baffle (20).

10. Mudguard (14) according to any one of the preceding claims, **characterised in that** the baffle (20) comprises a securing support (54) and an insulating material (56) which is preferably made of glass wool and phenolic resin and coated with an oleophobic protection layer, the insulating material (56) preferably having a thickness between 13 and 17 mm and preferably having a mass per unit area between 400 and 600 g/m².

11. Mudguard (14) according to any one of the preceding claims, **characterised in that** the baffle (20) is a part which is fixed to the body (21) of the mudguard (14).

12. Motor vehicle (4) comprising at least a wheel (10) and a mudguard (14) covering the wheel (10), **characterised in that** the mudguard (14) is in accordance with any one of claims 1 to 11.

13. Motor vehicle (4) according to claim 12, **characterised in that** it comprises an engine (18) equipped with a distribution unit (16), the acoustic baffle (20) being arranged opposite the distribution unit (16) of the engine (18).

14. Motor vehicle (4) according to either claim 12 or claim 13, **characterised in that** the vehicle comprises a windscreen-wash container (86) and a rail (88), the mudguard (14) comprising a guide tongue (82) to be wedged between the windscreen-wash container (86) and the rail (88).

## Patentansprüche

1. Schmutzfänger (14) für Kraftfahrzeug (2) des Typs, der dazu bestimmt ist, zwischen einem Radkasten (8) einer Karosserie (6) und einem Rad (10) eines Kraftfahrzeugs (2) positioniert zu werden, wobei der Schmutzfänger (14) Folgendes umfasst:
- einen Körper (21), der eine Schale (22) umfasst, die ein Radkastenvolumen begrenzt, wobei die Schale (22) eine gekrümmte Wand (32), die dazu bestimmt ist, sich gegenüber der Lauffläche des Rads (10) zu befinden, und eine vertikale Wand (34) umfasst, die dazu bestimmt ist, sich gegenüber der Felge des Rads (10) zu befinden; und
- eine Schallwand (20), die mit dem Körper (21) verbunden ist;
**dadurch gekennzeichnet, dass** die Schallwand (20) einen an die vertikale Wand (34) angebauten und die vertikale Wand (34) bedeckenden Teil (46) und einen den angebauten Teil (46) verlängernden überstehenden Teil (48) umfasst, der in Bezug auf die gekrümmte Wand (32) der Schale (22) im Allgemeinen radial übersteht.

2. Schmutzfänger (14) nach Anspruch 1, **dadurch gekennzeichnet, dass** die Wand (20) von einem unteren Ende des Körpers (21) des Schmutzfängers (14) ausgehend nach oben verläuft.

3. Schmutzfänger (14) nach Anspruch 1 oder 2, **dadurch gekennzeichnet, dass** die Wand (20) im Wesentlichen eine vertikale Wandoberfläche (50) bildet.

4. Schmutzfänger (14) nach einem der vorhergehenden Ansprüche, **dadurch gekennzeichnet, dass** die Wand (20) eine Führungszunge (82) umfasst, die dazu bestimmt ist, für das Einsetzen des Schmutzfängers (14) in das Fahrzeug (2) mittels Verschiebung nach oben mit Elementen (86, 88) des Fahrzeugs (4) zusammenzuwirken.

5. Schmutzfänger (14) nach Anspruch 3 oder 4, **dadurch gekennzeichnet, dass** die Führungszunge (82) ein Relief (84) für das Einklemmen zwischen zwei Elementen (86, 88) des Fahrzeugs (4) bildet.

6. Schmutzfänger (14) nach einem der vorhergehenden Ansprüche, **dadurch gekennzeichnet, dass** eine der beiden, die Wand (20) und die vertikale Wand (34), eine vertikale Rippe (74) bildet, die dazu bestimmt ist, mit einer vertikalen Nut der anderen der beiden, der Wand (20) und der vertikalen Wand (34), zusammenzuwirken.

7. Schmutzfänger (14) nach einem der vorhergehenden Ansprüche, **dadurch gekennzeichnet, dass** eine der beiden, die Wand (20) und die vertikale Wand (34), ein Organ (72) für das vertikale Einhängen in einem entsprechenden Loch der anderen der beiden, der Wand (20) und der vertikalen Wand (34), umfasst.

8. Schmutzfänger (14) nach einem der vorhergehenden Ansprüche, **dadurch gekennzeichnet, dass** der Körper (21) des Schmutzfängers (14) eine horizontale Wand (23) umfasst, die die Schale (22) verlängert, wobei die Wand (20) mindestens eine Lasche (76) zur Befestigung an der horizontalen Wand (23) umfasst.

9. Schmutzfänger (14) nach einem der vorhergehenden Ansprüche, **dadurch gekennzeichnet, dass** der überstehende Teil (48) der Wand (20) eine vertikale Versteifungsrippe (80) umfasst, wobei sich die Versteifungsrippe (80) vorzugsweise von dem unteren Ende der Wand (20) ausgehend nach oben erstreckt.

10. Schmutzfänger (14) nach einem der vorhergehenden Ansprüche, **dadurch gekennzeichnet, dass** die Wand (20) eine Befestigungsauflage (54) und ein Isoliermaterial (56) umfasst, das sich vorzugsweise aus Glaswolle und Phenolharz zusammensetzt und mit einer ölabweisenden Schutzschicht überzogen ist, wobei das Isoliermaterial (56) vorzugsweise eine Dicke zwischen 13 und 17 mm aufweist und vorzugsweise eine Oberflächenmasse zwischen 400 und 600 g/m² besitzt.

11. Schmutzfänger (14) nach einem der vorhergehenden Ansprüche, **dadurch gekennzeichnet, dass** die Wand (20) ein an den Körper (21) des Schmutzfängers (14) angesetztes Teil ist.

12. Kraftfahrzeug (4), umfassend mindestens ein Rad (10) und einen Schmutzfänger (14), der das Rad (10) umgibt, **dadurch gekennzeichnet, dass** der Schmutzfänger (14) nach einem der Ansprüche 1 bis 11 ausgeführt ist.

13. Kraftfahrzeug (4) nach Anspruch 12, **dadurch gekennzeichnet, dass** es einen Motor (18) umfasst, der mit einer Motorsteuerungsgruppe (16) ausgestattet ist, wobei die Schallwand (20) gegenüber der Motorsteuerungsgruppe (16) des Motors (18) angeordnet ist.

14. Kraftfahrzeug (4) nach Anspruch 12 oder 13, **dadurch gekennzeichnet, dass** das Fahrzeug einen Scheibenwaschbehälter (86) und einen Längsträger (88) aufweist, wobei der Schmutzfänger (14) eine Führungszunge (82) aufweist, die dazu bestimmt ist, zwischen dem Scheibenwaschbehälter (86) und dem Längsträger (88) eingeklemmt zu werden.
